# EUROPÄISCHE PATENTSCHRIFT

(11) **EP 3 408 523 B1**
(45) Veröffentlichungstag und Bekanntmachung des Hinweises auf die Patenterteilung: **08.01.2020**
(21) Anmeldenummer: 17700891.9
(22) Anmeldetag: 19.01.2017
(51) Int. Cl.: F02M 21/02, F02D 41/00

(54) **BRENNGAS-INJEKTORANORDNUNG UND VERFAHREN**
FUEL GAS INJECTOR APPARATUS AND METHOD
APPAREIL ET PROCÉDÉ D'INJECTEUR DE GAZ DE CARBURANT

(30) Priorität: 28.01.2016 DE 102016000894
(43) Veröffentlichungstag der Anmeldung: 05.12.2018
(73) Patentinhaber: L'Orange GmbH, 70435 Stuttgart (DE)
(72) Erfinder: BERGER, Ingmar, 70374 Stuttgart (DE); KOCH, Hans-Joachim, 72293 Glatten (DE); NITSCHE, Michael, 71701 Schwieberdingen (DE); SIEBERT, Steffen, 71101 Schönaich (DE)
(74) Vertreter: Conroy, John
(86) Internationale Anmeldenummer: PCT/EP2017/000065
(87) Internationale Veröffentlichungsnummer: WO 2017/129354

(56) Entgegenhaltungen:
- WO-A1-2011/130832
- WO-A2-2012/155122
- DE-A1-102014 207 473
- US-A1- 2012 325 180

## Beschreibung

Die vorliegende Erfindung betrifft eine Brenngas-Injektoranordnung gemäß dem Oberbegriff von Anspruch 1. Des Weiteren betrifft die Erfindung ein Verfahren gemäß dem Oberbegriff von Anspruch 11.

Im Stand der Technik sind gattungsgemäße Brenngas-Injektoranordnungen bekannt, bei welchen ein Brenngasinjektor eine Mehrzahl von Brenngas-Düsenventilgliedem, zumeist Düsennadeln, aufweist, z.B. aus der Druckschrift WO2015/101406 A1. Bei solchen Brenngas-Injektoranordnungen zur gasmotorischen Verbrennung wird das Brenngas mit Hochdruck über z.B. 300bar hinaus direkt in den Brennraum eingeblasen, mit dem Ziel, die Menge unverbrannten Brenngases, z.B. Methans, gegenüber konventionellen Gasmotoren mit homogenem Gas-LuftGemisch zu minimieren. Problematisch ist hierbei, dass das Brenngas nach Beendigung der Brenngas-Einblasung, d.h. via Schließen eines jeweiligen Düsenventilglieds, sehr rasch "stehen" bleibt, d.h. dieses Restgas wird einer Verbrennung nicht mehr zugeführt. Ein zusätzliches Beispiel für eine Injektoranordnung ist in der DE 10 2014 207473 A1 gezeigt.

Ausgehend hiervon liegt der vorliegenden Erfindung die Aufgabe zu Grunde, eine Brenngas-Injektoranordnung sowie ein damit ausführbares Verfahren anzugeben, welche ermöglichen, eine Restgasverbrennung zu verbessern.

Diese Aufgabe wird mit einer Brenngas-Injektoranordnung mit den Merkmalen des Anspruchs 1 bzw. einem Verfahren mit den Merkmalen des Anspruchs 11 gelöst.

Vorteilhafte Weiterbildungen und Ausführungsformen der Erfindung sind in den weiteren Ansprüchen angegeben.

Vorgeschlagen wird erfindungsgemäß eine Brenngas-Injektoranordnung mit einem Brenngasinjektor. Der Brenngasinjektor kann als Single-Fuel-Kraftstoffinjektor bereitgestellt sein, zum Beispiel und bevorzugt auch Teil eines Dual-Fuel-Kraftstoffinjektors sein, welcher zum Beispiel weiterhin zur Verwendung mit einem Flüssigkraftstoff, zum Beispiel Dieselkraftstoff, Biokraftstoff oder Schweröl vorgesehen ist. Der Brenngasinjektor ist bereitgestellt für die Verwendung mit einem gasförmigen Kraftstoff bzw. Brenngas, zum Beispiel Erdgas, Sondergas, Deponiegas, Wasserstoff oder einem davon verschiedenen Brenngas, das heißt für die Ausdüsung bzw. Einblasung in einen Brennraum. Bei Verwendung als Teil eines Dual-Fuel-Kraftstoffinjektors kann der Brenngasinjektor im Rahmen einer Brenngas-Betriebsart insbesondere für einen Zündstrahlbetrieb vorgesehen sein (Flüssigkraftstoff-Zündstrahl zur Zündung des gasförmigen Kraftstoffs). Der Brenngasinjektor ist z.B. mit einem Großmotor verwendbar, zum Beispiel in einem Kraftfahrzeug wie etwa einem Schiff, einer Lok oder einem Nutz- oder Sonderfahrzeug, oder zum Beispiel für eine stationäre Einrichtung vorgesehen, z.B. für ein Blockheizkraftwerk, ein (Not-) Stromaggregat, z.B. auch für Industrieanwendungen.

Der Brenngasinjektor weist über einen Umfang (desselben) verteilt, bevorzugt gleichverteilt, Brenngas-Düsen(öffnungs)gruppen mit wenigstens je einer Brenngas-Düsenöffnung auf. Zum Beispiel weist der Brenngasinjektor - über seinen Umfang verteilt - drei Brenngas-Düsenöffnungsgruppen mit jeweils zwei oder drei Brenngas-Düsenöffnungen auf. Im Hinblick auf (radiale) Mittelachsen der Brenngas-Düsenöffnungsgruppen ergibt sich hierbei bevorzugt eine Anordnung, bei welcher dieselben um 120° zueinander in Umfangsrichtung versetzt sind.

Bei dem Brenngasinjektor ist einer jeweiligen Brenngas-Düsenöffnungsgruppe je ein in Öffnungsstellung und Schließstellung steuerbares Brenngas-Düsenventilglied zur selektiven Brenngas-Ausdüsung über ihre wenigstens eine Brenngas-Düsenöffnung zugeordnet. Ein jeweiliges Brenngas-Düsenventilglied ist bevorzugt eine insbesondere einteilige Düsennadel, weiterhin insbesondere (axial) hubsteuerbar. Ferner ist die Brenngas-Injektoranordnung im Rahmen der Erfindung bevorzugt auch eingerichtet, im Rahmen jeweiliger - mit dem Brenngasinjektors zu absolvierender - Brenngas-Ausdüsereignisse (Einblasung), Brenngas je über sämtliche Brenngas-Düsenöffnungsgruppen bzw. Brenngas-Düsenöffnungen des Brenngasinjektors auszudüsen, d.h. je sämtliche Brenngas-Düsenventilglieder an dem Brenngas-Ausdüsereignis zu beteiligen bzw. in Öffnungsstellung zu steuern. Bevorzugt kann das jeweilige Brenngas-Düsenventilglied bei dem Brenngasinjektor hydraulisch gesteuert werden, zum Beispiel indirekt über ein Pilotventil. Alternativ ist aber auch eine direkte Steuerung denkbar.

In die Erfindung kennzeichnender Weise ist die Brenngas-Injektoranordnung hierbei eingerichtet, die Brenngas-Düsenventilglieder mit vorbestimmtem Zeitversatz nacheinander in Schließstellung zu steuern, d.h. insbesondere bei Beenden des jeweiligen Brenngas-Ausdüsereignisses. Hierdurch wird es möglich, dass Restgas, das heißt unverbranntes Brenngas, welches - Brenngasbetrieb des Brenngasinjektors vorausgesetzt - mit Schließen eines Brenngas-Düsenventilglieds in Form von Restgaswolken bzw. -wölkchen (in einem Brennraum) auftritt, mittels Entflammung am Brenngas-Abbrandort (die Begrifflichkeit "Abbrandort" sei hierbei auch im Sinne von Abbrandbereich zu verstehen) eines anderen, noch offen gesteuerten Brenngas-Düsenventilglieds abgebrannt wird, d.h. noch während desselben bzw. jeweiligen Brenngas-Ausdüsereignisses. Mithin wird es möglich, die Menge unverbrannten Brenngases vorteilhaft zu reduzieren, d.h. gegenüber einer Brenngas-Injektoranordnung aus dem Stand der Technik, bei welcher die Brenngas-Düsenventilglieder regelmäßig im Wesentlichen gleichzeitig schließen. Vorzugsweise ist die Brenngas-Injektoranordnung hierbei auch eingerichtet, die Brenngas-Düsenventilglieder nacheinander im Umfangssinn (mit Bezug auf den Brenngasinjektor) mit vorbestimmtem Zeitversatz in Schließstellung zu steuern, d.h. auch mit vorbestimmter Richtung.

Bevorzugt sind im Rahmen der Erfindung sowohl der vorbestimmte Zeitversatz als auch der Umfangssinn in Abhängigkeit eines Brennraumdralles gewählt, das heißt eines Brennraumdralles in einem zur Verwendung mit der Brenngas-Injektoranordnung vorgesehenen Brennraum, i.e. einer Brennkraftmaschine. Bevorzugt wird hierbei die Schließreihenfolge der Brenngas-Düsenventilglieder bzw. ein Umfangssinn in Bezug auf ein Schließen nacheinander gemäß dem Drehsinn des Brennraumdralles bzw. der Drallrichtung in dem mit der Brenngas-Injektoranordnung zu verwendenden Brennraum gewählt, das heißt der Umfangssinn entspricht insbesondere der Brennraumdrallrichtung bzw. dem Drehsinn des Brennraumdralles. Somit kann das Restgas seitens eines in Schließstellung gesteuerten Brenngas-Düsenventilglieds während des vorbestimmten Zeitversatzes brennraumdrallbasiert an das nachfolgend in Schließstellung zu steuernde Brenngas-Düsenventilglied transportiert werden, das heißt mittels der Brennraumdrallströmung.

Der Brennraumdrall kann hierbei auf an sich bekannte Weise, z.B. mittels wenigstens eines als Drallkanal ausgestalteten Einlasskanals, am Brennraum erzeugt werden, wobei ein solcher Brennraumdrall mit vorbestimmter Drallrichtung - um eine axiale Brennraumachse - rotiert. Bevorzugt wird der Brenngasinjektor hierbei - im Rahmen einer Anordnung am Brennraum - zentral am Brennraum(dach) angeordnet, wobei die axiale Brennraumachse bevorzugt auch koaxial mit einer axialen Brenngasinjektorachse orientiert ist.

Mit einer solchen Ausgestaltung und weiterhin allgemein bevorzugt ist im Rahmen der Erfindung insoweit eine brennraumdrallbasierte Mitnahme des Restgases - von einem Abbrandort eines schließenden zu einem Abbrandort eines nachfolgend noch schließenden, insbesondere nächstschließenden, Brenngas-Düsenventilglieds - vorgesehen, wobei die Brenngas-Injektoranordnung bevorzugt auch eingerichtet ist, bei Verwendung mit dem Brennraum den vorbestimmten Zeitversatz des Schließens korrespondierend mit einer Dauer einzustellen, welche das Restgas für das brennraumdrallabhängige bzw. -basierte Zurücklegen dieser Wegstrecke zwischen den Abbrandorten benötigt, d.h. einer Restgastransportdauer. Somit kann sichergestellt werden, dass am Abbrandort des nächstschließenden Brenngas-Düsenventilglieds auch noch eine Entflammung bzw. Zündung ermöglicht ist (während des betreffenden Einblas- bzw. Ausdüsereignisses), d.h. via anhaltende Offensteuerung desselben über den Zeitversatz. Beachtlich ist insoweit, dass die Brenngas-Injektoranordnung eine Brenngasinjektorsteuerung derart ermöglicht, dass eine Brenngasentflammung am Abbrandort eines Brenngas-Düsenventilglieds zu einer Zeit vorherrscht, zu welcher die brennraumdrallbasiert antransportierte Restgaswolke seitens des vorher schließenden Brenngas-Düsenventilglieds am Abbrandort mitentflammbar ist.

Vorzugsweise ist die Brenngas-Injektoranordnung weiterhin eingerichtet, im Rahmen jeweiliger Brenngas-Ausdüsereignisse die Brenngas-Düsenventilglieder gleichzeitig offen zu steuern, wobei jedoch auch Ausgestaltungen möglich sind, bei welchen die Brenngas-Düsenventilglieder zeitversetzt öffnen. Im Rahmen eines zeitversetzten Öffnens können die Brenngas-Düsenventilglieder nacheinander auch mit vorbestimmtem Öffnungs-Zeitversatz in Öffnungsstellung gesteuert werden, insbesondere auch mit dem Umfangssinn des zeitversetzten Schließens. Hierbei überlappen Öffnungs(zeit)fenster aufeinander folgend schließender Brenngas-Düsenventilglieder bevorzugt zeitlich, so dass die Flamme im Brennraum für die Dauer des Brenngas-Ausdüsereignisses nicht erlischt.

Allgemein kann die Brenngas-Injektoranordnung eine Kontrolleinrichtung aufweisen, welche den Brenngasinjektor mit dem vorbestimmten Schließ- oder auch Öffnungszeitversatz steuert, zum Beispiel auch im Rahmen einer direkten Injektorsteuerung. Zum Beispiel kann die Kontrolleinrichtung durch ein Steuergerät gebildet werden, zum Beispiel durch eine Motorsteuerung oder Verbrennungssteuerung, in welcher Kontrolleinrichtung z.B. auch Brennraumdrallparameter, wie die Drallgeschwindigkeit, die Drallrichtung, oder weitere zur Einstellung des vorbestimmten Zeitversatzes hinterlegt sind.

Weiterhin ist von der Erfindung mitumfasst, dass der Brenngasinjektor ausgelegt ist, die nacheinander erfolgende Einnahme der Schließstellung und/oder der Öffnungsstellung hydraulisch zu bewirken. Zum Beispiel kann ein hydraulischer Steuerkreis für die Brenngas-Düsenventilglieder hierbei geeignet ausgelegt sein, insbesondere unterschiedlich abgelängte Steuerleitungen zu den Brenngas-Düsenventilgliedern und/oder verschiedene (Steuer-)Drosselquerschnitte über die Brenngas-Düsenventilglieder aufweisen.

Vorgeschlagen wird mit der Erfindung auch eine Brennkraftmaschine mit einem brennraumdrallbehafteten Brennraum, insbesondere wie oben erörtert, wobei die Brennkraftmaschine wenigstens eine wie vorstehend erörterte Brenngas-Injektoranordnung aufweist, und wobei der Brenngasinjektor, insbesondere wiederum wie oben erörtert, an dem Brennraum angeordnet ist.

Die Erfindung umfasst weiterhin ein Verfahren zur Steuerung von Brenngas-Düsenventilgliedern eines Brenngasinjektors, welcher an einem brennraumdrallbehafteten Brennraum angeordnet ist, wobei die Brenngas-Düsenventilglieder nacheinander mit vorbestimmten Zeitversatz in Schließstellung gesteuert werden, d.h. insbesondere während jeweiliger Brenngas-Einblasereignisse. Die Steuerung in Schließstellung erfolgt hierbei insbesondere in Brennraumdrallrichtung nacheinander.

Bevorzugt werden bei dem Verfahren die Brenngas-Düsenventilglieder so gesteuert, dass Restgas, insbesondere in Form von Brenngaswölkchen, seitens eines in Schließstellung gesteuerten Brenngas-Düsenventilglieds bzw. dessen Abbrandort während der Dauer des vorbestimmten Zeitversatzes brennraumdrallbasiert an das nachfolgend in Schließstellung zu steuernde Brenngas-Düsenventilglied bzw. dessen Abbrandort transportiert wird, wobei weiterhin vorgesehen ist, dass die Brenngas-Düsenventilglieder so gesteuert werden, dass das Restgas seitens eines in Schließstellung gesteuerten Brenngas-Düsenventilglieds bzw. dessen Abbrandort - während der Dauer des vorbestimmten Zeitversatzes - durch den Brenngasabbrand an dem nachfolgend in Schließstellung zu steuernden Brenngas-Düsenventilglied bzw. dessen Abbrandort gezündet bzw. entflammt wird.

Auch im Hinblick auf das Verfahren wird auf die Ausführungen zur Brenngas-Injektoranordnung verwiesen, welche für das Verfahren entsprechend greifen können.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in verschiedener Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch stark vereinfacht einen Brenngasinjektor einer erfindungsgemäßen Brenngas-Injektoranordnung angeordnet an einem Brennraum einer Brennkraftmaschine gemäß einer möglichen Ausführungsform der Erfindung, wobei ein Betriebszustand eines Brenngas-Ausdüsereignisses veranschaulicht ist, in welchem ein Brenngas-Düsenventilglied schließt, während zwei weitere Brenngas-Düsenventilglieder noch geöffnet sind.
- Fig. 2: exemplarisch und schematisch eine Ansicht gemäß Fig. 1, wobei ein brennraumdrallbasierter Restgastransport hin zu einem zweiten, während des Brenngas-Ausdüsereignisses nachfolgend zeitversetzt schließenden Brenngas-Düsenventilglied veranschaulicht ist.
- Fig. 3: exemplarisch und schematisch eine Ansicht analog zu Fig. 1, einen Betriebszustand während des Brenngas-Ausdüsereignisses veranschaulichend, in welchem nunmehr das zweite Brenngas-Düsenventilglied schließt.
- Fig. 4: exemplarisch und schematisch eine Ansicht analog zu Fig. 2, einen brennraumdrallbasierten Restgastransport hin zu dem dritten, während des Brenngas-Ausdüsereignisses nachfolgend zeitversetzt schließenden Brenngas-Düsenventilglied veranschaulichend.
- Fig. 5: exemplarisch und schematisch ein Diagramm, welches Öffnungsfenster jeweiliger Brenngas-Düsenventilglieder der Brenngas-Injektoranordnung bei einem BrenngasAusdüsereignis gemäß einer ersten möglichen Ausgestaltung der Erfindung veranschaulicht.
- Fig. 6: exemplarisch und schematisch ein Diagramm analog zu Fig. 5, welches Öffnungsfenster gemäß einer weiteren möglichen Ausgestaltung der Erfindung veranschaulicht.
- Fig. 7: exemplarisch und schematisch ein Strukturschaubild, fokussiert auf einen hydraulischen Steuerkreis eines Brenngasinjektors zur Bewirkung eines zeitversetzten Schließens der Brenngas-Düsenventilglieder gemäß einer möglichen Ausgestaltung der Erfindung.
- Fig. 8: exemplarisch und schematisch ein Strukturschauild analog zu Fig. 7, eine weitere mögliche Ausgestaltung der Erfindung veranschaulichend.

In der nachfolgenden Beschreibung und den Zeichnungen entsprechen gleichen Bezugszeichen Elemente gleicher oder vergleichbarer Funktion.

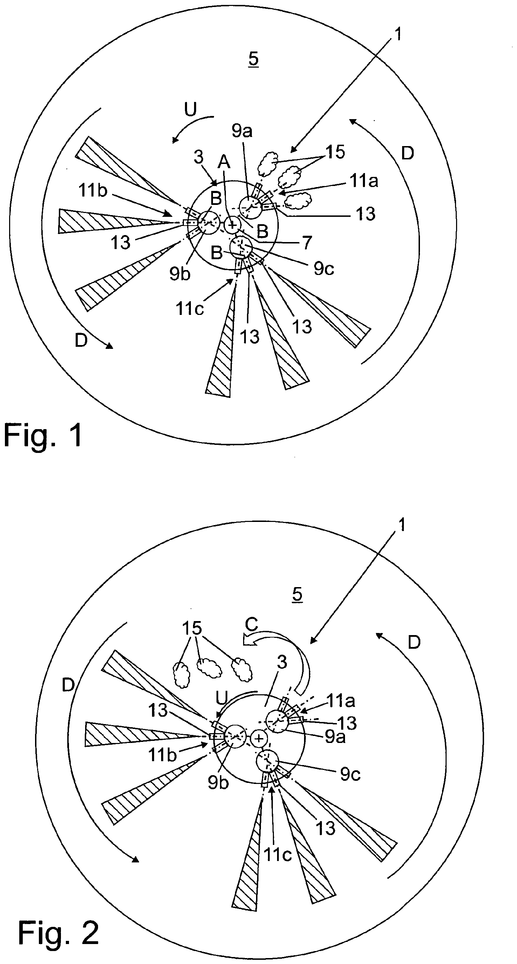

**Fig. 1** zeigt eine Brenngas-Injektoranordnung 1 mit einem Brenngasinjektor 3, welcher an einem Brennraum 5 einer Brennkraftmaschine angeordnet ist, insbesondere zentral am Brennraumdach des Brennraums 5, welcher z.B. kreisförmigen Querschnitt aufweist. Der Brenngasinjektor 3 ist als Mehrnadel-Kraftstoffinjektor bereitgestellt, z.B. als Teil eines Dual-Fuel-Kraftstoffinjektors gebildet, welcher zentral angeordnet ein Flüssigkraftstoff-Düsenventilglied 7 (Flüssigkraftstoff-Düsennadel) aufweisen kann. Eine (axiale) Mittelachse A des Brenngasinjektors 3 fällt hierbei mit der axialen Achse des Brennraums 5 zusammen, d.h. im Sinne koaxialer Achsen.

Der Brenngasinjektor 3 weist in seiner Umfangsrichtung, insbesondere über den Umfang gleichverteilt, eine Anzahl von Brenngas-Düsenventilgliedern 9a, 9b, 9c auf, vorliegend drei Brenngas-Düsenventilglieder, insbesondere Brenngas-Düsennadeln. Vorliegend weisen die Brenngas-Düsenventilglieder 9a,b,c somit einen (Umfangs-)Versatz von 120° je zueinander auf. Daneben sind jedoch auch Ausgestaltungen denkbar, bei welchen der Brenngasinjektor 3 zwei, vier oder mehr Brenngas-Düsenventilglieder 9a,b,c über den Umfang verteilt aufweist.

Einem jeden der Brenngas-Düsenventilglieder 9a,b,c ist eine Brenngas-Düsenöffnungsgruppe 11a bzw. 11b bzw. 11c zugeordnet, welche wenigstens eine Brenngas-Düsenöffnung 13 aufweist, vorliegend zum Beispiel drei Brenngas-Düsenöffnungen 13. Über eine jeweilige Brenngas-Düsenöffnung 13 kann das Ausdüsen von Brenngas in im Wesentlichen radialer Richtung erfolgen. In Bezug auf eine sich radial erstreckende Mittelachse B der jeweiligen Brenngas-Düsenöffnungsgruppe weisen auch diese einen Umfangsversatz von 120° zueinander auf. Somit ergibt sich im Rahmen einer Brenngas-Ausdüsung über die Brenngas-Düsenöffnungen 13 eine gute rundumseitige Brenngas-Verteilung im Brennraum über 360°.

Die jeweiligen Brenngas-Düsenventilglieder 9a,b,c sind zur Auf- und Zusteuerung der zugeordneten Brenngas-Düsenöffnungen 13 bzw. zum selektiven Ausdüsen von Brenngas über die Brenngas-Düsenöffnungen 13 je in Öffnungs- bzw. Schließstellung hubsteuerbar, das heißt axial. Hierbei können die Brenngas-Düsenventilglieder 9a,b,c je gegen einen Ventilsitz wirken (nicht dargestellt). Eine Steuerung der Brenngas-Düsenventilglieder 9a,b,c kann z.B. von einer Kontrolleinheit, zum Beispiel einem Steuergerät der Brenngas-Injektoranordnung 1, geleistet werden (nicht dargestellt). Hierbei noch sei angemerkt, dass die Brenngas-Düsenventilglieder 9a,b, c mit der vorgeschlagenen Brenngas-Injektoranordnung 1 je Brenngas-Ausdüsereignis stets sämtlich in Offenstellung gesteuert werden, d.h. für eine Ausdüsung über sämtliche Brenngas-Düsenöffnungen 13.

Um insbesondere eine verbesserte Restgasverbrennung gegenüber vorbekannten Brenngas-Injektoranordnungen zu erzielen, ist die Brenngas-Injektoranordnung 1 eingerichtet, die Brenngas-Düsenventilglieder 9a,b,c mit vorbestimmtem Zeitversatz T nacheinander in Schließstellung zu steuern, d.h. insbesondere korrespondierend mit einem Beenden eines jeweiligen Ausdüs- bzw. Einblasereignisses. Hierbei erfolgt die Steuerung in die Schließstellung insbesondere auch in einem Umfangssinn U, d.h. mit Bezug auf den Brenngasinjektor 3.

Dies wird nachfolgend mit Bezug auf die Figuren 1 bis 4 näher erläutert. In diesen Figuren ist auch ein Brennraumdrall mit einer Brennraumdrallrichtung, Pfeile D, veranschaulicht, welcher im Brennraum 5 bei Brenngas-Betrieb einer zugehörigen Brennkraftmaschine vorherrscht, mithin bei Verwendung der Brenngas-Injektoranordnung 1 an dem Brennraum 5.

In Fig. 1 ist ein Betriebszustand des Brenngasinjektors 3 veranschaulicht, bei welchem innerhalb eines Brenngas-Ausdüsereignisses ein erstes Brenngas-Düsenventilglied 9a bereits in Schließstellung gesteuert ist, während die zwei weiteren - in Brennraumdrallrichtung D stromabwärtigen - Brenngas-Düsenventilglieder 9b, 9c noch in Offenstellung gesteuert sind (die schraffierten Dreiecke veranschaulichen das ausgedüste Brenngas). Am Abbrandort des in Schließstellung gesteuerten Brenngas-Düsenventilglieds 9a bilden sich hierbei Restgaswolken 15 (nahe der Düsenöffnungen 13), welche im Brennraum 5 am Abbrandort des zugesteuerten Brenngas-Düsenventilglieds 9a nicht mehr verbrannt werden.

Um dennoch den Abbrand dieses Restgases 15 während des aktuellen Brenngas-Ausdüsereignisses zu gewährleisten, wird das in Brennraumdrallrichtung D nachfolgende Brenngas-Düsenventilglied 9b später, insbesondere mit vorbestimmtem Zeitversatz T, in Schließstellung gesteuert (das heißt während des fortdauernden Brenngas-Ausdüserereignisses). Hierbei ist der Zeitversatz T so gewählt, dass mit Eintreffen der brennraumdrallströmungsbasiert mitgenommenen Restgaswölkchen 15 am Abbrandort dieses in Brennraumdrallrichtung D nachfolgenden, später schließenden Brenngas-Düsenventilglieds 9b, s. **Fig. 2**, noch eine Entflammung derselben bzw. des Restgases 15 erfolgt. Hierzu ist weiterhin die Schließreihenfolge der Brenngas-Düsenventilglieder 9a,b,c in einem Umfangssinn U gewählt, welcher der Brennraumdrallrichtung D bzw. dem Drehsinn der Drallströmung entspricht, vergleiche Figuren 1 bis 4.

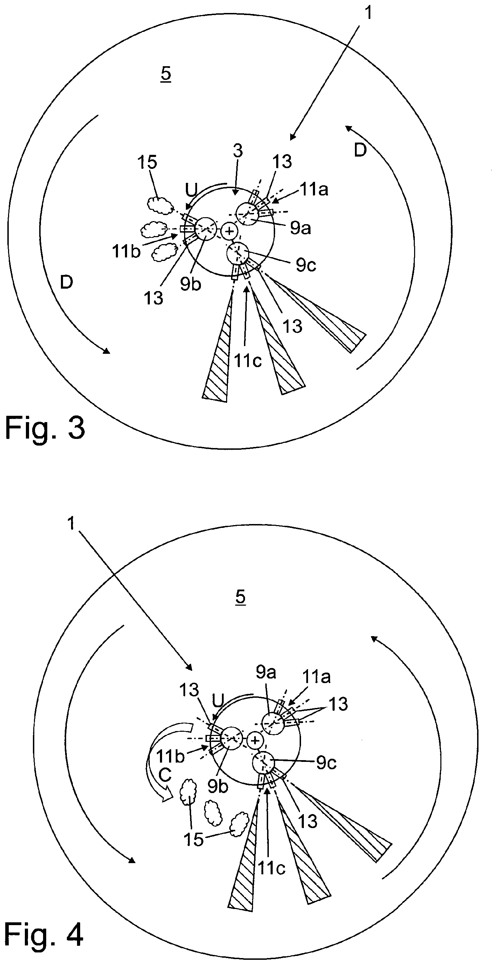

**Fig. 3** veranschaulicht nun einen Betriebszustand des Brenngasinjektors 3 (während des fortdauernden Brenngas-Ausdüsereignisses), bei welchem nunmehr auch das zweite Brenngas-Düsenventilglied 9b in Schließstellung gesteuert ist, während das in Brennraumdrallrichtung D nachfolgende, letzte Brenngas-Düsenventilglied 9c noch in Offenstellung gesteuert ist. Auch hierbei bilden sich wiederum Restgaswölkchen 15 am Abbrandort des in Schließstellung gesteuerten zweiten Brenngas-Düsenventilglieds 9b (nahe der Düsenöffnungen 13).

Um auch dieses Restgas 15 zu verbrennen wird, vergleiche **Fig. 4**, auch das letzte Brenngas-Düsenventilglied 9c erst in Schließstellung gesteuert, wenn das brennraumdrallströmungsgetragen zugeführte Restgas 15 seitens des zweiten-Brenngas-Düsenventilglieds 9b am Abbrandort des letzten-Brenngas-Düsenventilglied 9c entflammt wurde. Insoweit schließt auch das letzte Brenngas-Düsenventilglied 9c wiederum später als das vorhergehende, womit sodann das aktuelle Brenngas-Ausdüsereignis auch beendet ist. Auch hierbei ist der Zeitversatz T des Schließens wiederum gewählt, eine Entflammung des Restgases 15 in jedem Fall sicherzustellen. Bevorzugt ist der vorbestimmte Zeitversatz T zwischen jeweiligen nacheinander schließenden Brenngas-Düsenventilgliedern 9a,b,c auch einheitlich gewählt.

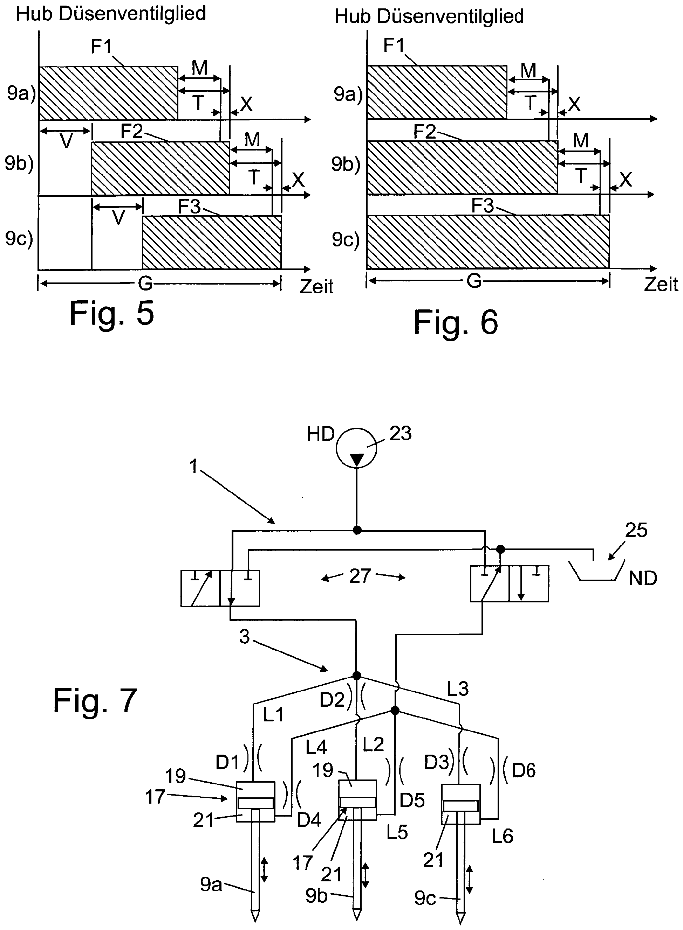

Nunmehr mit Bezug auf die Figuren 5 und 6 werden Diagramme erläutert, welche exemplarisch mögliche Öffnungs(zeit)fenster im Rahmen einer Brenngas-Düsenventilgliedsteuerung eines Brenngas-Ausdüsereignisses unter Beteiligung der drei Brenngas-Düsenventilglieder 9a,b,c veranschaulichen, das heißt einer erfindungsgemäßen Brenngas-Injektoranordnung 1.

Wie **Fig. 5** zeigt, können die Brenngas-Düsenventilglieder 9a,b,c, welche jeweils mit einem vorbestimmten Zeitversatz T nacheinander in Schließstellung gesteuert werden, auch einen vorbestimmten Öffnungs-Zeitversatz V bei der Steuerung in Offenstellung aufweisen, d.h. nacheinander öffnen. Auch ein Öffnen erfolgt hierbei vorzugsweise in der Brennraumdrallrichtung D nacheinander. Die Öffnungsfenster F1, F2, F3 überlappen hierbei, so dass die Entflammung im Brennraum 5 über die gesamte Dauer G des Brenngas-Ausdüsereignisses nicht erlischt.

Weiterhin ist aus Fig. 5 ersichtlich, dass der vorbestimmte Zeitversatz T in der Schließsteuerung der Brenngas-Düsenventilglieder 9a,b,c eine Dauer X mitumfassen kann, welche als Sicherheitspolster zu einer Zeitspanne M aufaddiert ist, welche Zeitspanne M vorzugsweise die Maximaldauer repräsentiert, welche die brennraumdrallbasierte Restgasmitnahme bzw. der brennraumdrallbasierte Restgastransport zwischen den nacheinander schließenden Brenngas-Düsenventilgliedern 9a,b,c bzw. deren Abbrandort erfordert. Insoweit kann sich der vorbestimmte Zeitversatz T hierbei aus der maximalen Mitnahmedauer M und einem Sicherheitszeitfenster X bzw. Zeitpolster zusammensetzen. Die maximale Mitnahmedauer M kann zum Beispiel rechnerisch anhand der Drallgeschwindigkeit im Brennraum oder auch empirisch ermittelt werden (entsprechende Größen können z.B. auch einer Verbrennungssteuerung entnommen werden).

**Fig. 6** zeigt nunmehr ein Diagramm, welches im Rahmen einer bevorzugten Ausgestaltung die zeitgleiche Offensteuerung der Brenngas-Düsenventilglieder 9a,b,c mit Beginn eines Brenngas-Ausdüsereignisses veranschaulicht, welche erfindungsgemäß aber auch mit vorbestimmtem Zeitversatz T nacheinander in Schließstellung gesteuert werden. Auch hierbei ist sichergestellt, dass die Entflammung im Brennraum 5 über die gesamte Dauer G des Brenngas-Ausdüsereignisses nicht erlischt. Angemerkt sei hierzu noch, dass obige Ausführungen im Hinblick auf die Wahl des vorbestimmten Zeitversatzes T in der Schließsteuerung - wie diese für die Fig. 5 ergingen - auch hier in gleicher Weise greifen können.

**Fig. 7** veranschaulicht nunmehr exemplarisch und schematisch stark vereinfacht den Brenngasinjektor 3 samt hydraulischen Steuerkreis, wobei die jeweiligen Brenngas-Düsenventilglieder 9a,b,c zum Beispiel über eine jeweilige Kolbensteuerung 17 in Offen- oder Schließstellung steuerbar sind. An einen jeweiligen ersten Steuerraum 19 der Kolbensteuerung 17 als auch einen jeweiligen zweiten Steuerraum 21 der Kolbensteuerung 17 kann alternativ Hochdruck (seitens einer Hochdruck(HD)quelle 23) oder Niederdruck (ND; Leckage 25) geschaltet werden, das heißt über eine Pilotventilanordnung 27, wobei mit (hydraulischer) Belastung jeweiliger erster Steuerräume 19 und gleichzeitiger Entlastung jeweiliger zweiter Steuerräume 21 die Brenngas-Düsenventilglieder 9a,b,c in Schließstellung gesteuert werden und wobei mit Belastung jeweiliger zweiter Steuerräume 21 und gleichzeitiger Entlastung jeweiliger erster Steuerräume 19 die Brenngas-Düsenventilglieder 9a,b,c in Offenstellung gesteuert werden.

Um das erfindungsgemäß zeitversetzte Schließen zu bewirken, kann der hydraulische Steuerkreis hierbei nunmehr geeignet ausgelegt sein, das heißt im Hinblick auf Leitungslängen und Drosselvorrichtungen D1-D6 der Strömungswege zu den jeweiligen Steuerräumen 19 bzw. 21. Zum Beispiel kann bei der gezeigten Sternschaltung die Leitungslänge L1 kleiner der Leitungslänge L2 und diese wiederum kleiner als die Leitungslänge L3 gewählt sein. Alternativ oder zusätzlich kann die Leitungslänge L4 kleiner als die Leitungslänge L5 und diese wiederum kleiner als die Leitungslänge L6 gewählt werden.

Weiterhin alternativ oder zusätzlich kann zum Beispiel der Drosselquerschnitt der Drossel D1 größer als ein Drosselquerschnitt der Drossel D2 und dieser wiederum größer als der Querschnitt der Drossel D3 gewählt sein, und nochmals alternativ oder zusätzlich kann der Drosselquerschnitt der Drossel D4 größer als der Drosselquerschnitt der Drossel D5 und dieser wiederum größer als jener der Drossel D6 gewählt werden.

Über diese Einstellmöglichkeiten kann ein Zeitversatz im Druckaufbau bzw. Druckabbau an den Steuerräumen der Brenngas-Düsenventilglieder 9a,b,c bewirkt werden, mithin die beabsichtigte Einstellung ermöglichend, dass die Brenngas-Düsenventilglieder 9a,b,c nacheinander in der Reihenfolge 9a, 9b, 9c schließen.

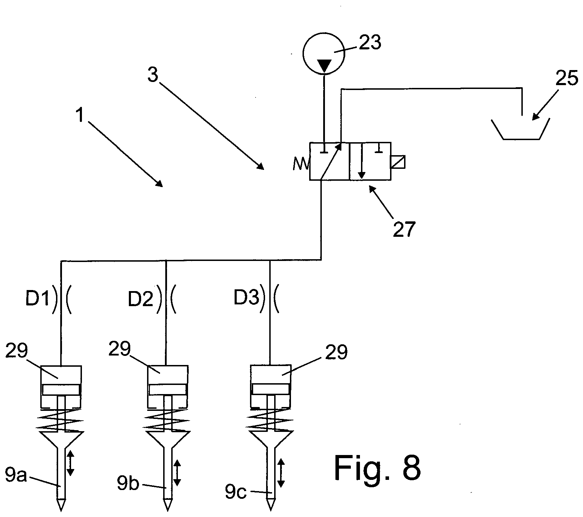

**Fig. 8** zeigt eine alternative mögliche Ausgestaltung des Brenngasinjektors 3 samt hydraulischem Steuerkreis, wobei die jeweiligen Brenngas-Düsenventilglieder 9a,b,c über je nur einen Steuerraum 29 be- und entlastet werden können, und wobei eine Schließkraftunterstützung über eine Schließfeder 31 realisiert ist. Bei einer solchen Ausgestaltung kann ein vorbestimmter Zeitversatz T zum Beispiel auch über geeignete Wahl der Federeigenschaften jeweiliger Schließfedern 31 gezielt eingestellt werden, weiterhin ebenfalls über die Leitungslängen und/oder die Querschnitte der Drosseln.

### BEZUGSZEICHENLISTE

- 1: Brenngas-Injektoranordnung
- 3: Brenngasinjektor
- 5: Brennraum
- 7: Flüssigkraftstoff-Düsenventilglied
- 9a: (erstes) Brenngas-Düsenventilglied
- 9b: (zweites) Brenngas-Düsenventilglied
- 9c: (drittes) Brenngas-Düsenventilglied
- 11a,b,c: Brenngas-Düsenöffnungsgruppe
- 13: Brenngas-Düsenöffnung
- 15: Restgaswolke
- 17: Kolbensteuerung
- 19: erster Steuerraum
- 21: zweiter Steuerraum
- 23: Hochdruckquelle
- 25: Leckage
- 27: Pilotventil(anordnung)
- 29: Steuerraum
- 31: Schließfeder

- A: Axiale Achse
- B: Radiale Achse
- C: Restgasmitnahme
- D: Brennraumdrallrichtung
- F1, F2, F3: Öffnungsfenster
- G: Gesamtdauer
- M: Zeitspanne
- T: Zeitversatz (Schließen)
- U: Umfangssinn
- V: Zeitversatz (Öffnen)
- X: Sicherheitspolster
- D1-D6: Drosselvorrichtungen
- L1-L6: Leitungen

## Patentansprüche

1. Brenngas-Injektoranordnung (1) mit einem Brenngasinjektor (3), welcher über einen Umfang verteilt Brenngas-Düsenöffnungsgruppen (11a,b,c) mit wenigstens je einer Brenngas-Düsenöffnung (13) aufweist, wobei einer jeweiligen Brenngas-Düsenöffnungsgruppe (11a,b,c) je ein in Öffnungsstellung und Schließstellung steuerbares Brenngas-Düsenventilglied (9a,b,c) des Brenngasinjektors (3) zur selektiven Brenngas-Ausdüsung über ihre wenigstens eine Brenngas-Düsenöffnung (13) zugeordnet ist,
**dadurch gekennzeichnet, dass**
- die Brenngas-Injektoranordnung (1) eingerichtet ist, die Brenngas-Düsenventilglieder (9a,b,c) mit vorbestimmtem Zeitversatz (T) nacheinander in Schließstellung zu steuern.

2. Brenngas-Injektoranordnung (1) nach Anspruch 1,
**dadurch gekennzeichnet, dass**
- die Brenngas-Injektoranordnung (1) eingerichtet ist, die Brenngas-Düsenventilglieder (9a,b,c) nacheinander in einem Umfangssinn (U) mit vorbestimmtem Zeitversatz (T) in Schließstellung zu steuern.

3. Brenngas-Injektoranordnung (1) nach einem der vorhergehenden Ansprüche,
**dadurch gekennzeichnet, dass**
- die Brenngas-Injektoranordnung (1) eingerichtet ist, die Brenngas-Düsenventilglieder (9a,b,c) nacheinander mit vorbestimmtem Öffnungs-Zeitversatz (V) in Öffnungsstellung zu steuern; und/oder
- die Brenngas-Injektoranordnung (1) eingerichtet ist, die Brenngas-Düsenventilglieder (9a,b,c) ohne Zeitversatz in Öffnungsstellung zu steuern.

4. Brenngas-Injektoranordnung (1) nach einem der vorhergehenden Ansprüche,
**dadurch gekennzeichnet, dass**
- die Brenngas-Injektoranordnung (1) eingerichtet ist, bei Verwendung mit einem Brennraum (5) den vorbestimmten Zeitversatz (T) korrespondierend mit einer brennraumdrallabhängigen Restgastransportdauer (M) zwischen Abbrandorten nacheinander in Schließstellung zu steuernder Brenngas-Düsenventilglieder (9a,b,c) einzustellen; und/oder
- die Schließreihenfolge der Brenngas-Düsenventilglieder (9a,b,c) bzw. ein Umfangssinn (U) in Bezug auf ein Schließen nacheinander gemäß einer Drallrichtung (D) in einem mit der Brenngas-Injektoranordnung (1) zu verwendenden Brennraum (5) gewählt ist.

5. Brenngas-Injektoranordnung (1) nach einem der vorhergehenden Ansprüche, **dadurch gekennzeichnet, dass**
- die Brenngas-Injektoranordnung (1) mit einem Brennraum (5) derart verwendet wird, dass Restgas (15) seitens eines in Schließstellung gesteuerten Brenngas-Düsenventilglieds (9a,b,c) während des vorbestimmten Zeitversatzes (T) brennraumdrallbasiert an den Abbrandort des nachfolgend in Schließstellung zu steuernden Brenngas-Düsenventilglieds (9a,b,c) transportiert wird; und/oder
- die Brenngas-Injektoranordnung (1) eingerichtet ist, bei Verwendung mit einem Brennraum (5) Restgas (15) seitens eines in Schließstellung gesteuerten Brenngas-Düsenventilglieds (9a,b,c) während des vorbestimmten Zeitversatzes (T) durch Brenngasabbrand an dem Abbrandort des nachfolgend in Schließstellung zu steuernden Brenngas-Düsenventilglieds (9a,b,c) zu zünden.

6. Brenngas-Injektoranordnung (1) nach einem der vorhergehenden Ansprüche, **dadurch gekennzeichnet, dass**
- der vorbestimmte Zeitversatz (T) eine Sicherheitsdauer (X) inbegreift.

7. Brenngas-Injektoranordnung (1) nach einem der vorhergehenden Ansprüche, **dadurch gekennzeichnet, dass**
- die Brenngas-Injektoranordnung (1) eine Kontrolleinrichtung aufweist, welche den Brenngasinjektor (3) mit dem vorbestimmten Zeitversatz (T) steuert.

8. Brenngas-Injektoranordnung (1) nach einem der vorhergehenden Ansprüche, **dadurch gekennzeichnet, dass**
- der Brenngasinjektor (3) die nacheinander erfolgende Einnahme der Schließstellung und/oder der Öffnungsstellung geeignet hydraulisch ausgelegt bewirkt.

9. Brenngas-Injektoranordnung (1) nach Anspruch 8,
**dadurch gekennzeichnet, dass**
- der Brenngasinjektor (3) die nacheinander erfolgende Einnahme der Schließstellung und/oder der Öffnungsstellung mittels unterschiedlicher Steuerleitungslängen (L1-L6) und/oder unterschiedlichen Drosselquerschnitten (D1-D6) in einem hydraulischen Steuerkreis für die Brenngas-Düsenventilglieder (9a,b,c) bewirkt.

10. Brennkraftmaschine mit wenigstens einem brennraumdrallbehafteten Brennraum (5), **gekennzeichnet durch**
- wenigstens eine Brenngas-Injektoranordnung (1) nach einem der vorhergehenden Ansprüche, wobei der Brenngasinjektor (3) an dem Brennraum (5) angeordnet ist.

11. Verfahren zur Steuerung von Brenngas-Düsenventilgliedern (9a,b,c) eines Brenngasinjektors (3), welcher an einem brennraumdrallbehafteten Brennraum (5) angeordnet ist,
**dadurch gekennzeichnet, dass**
- die Brenngas-Düsenventilglieder (9a,b,c) nacheinander mit vorbestimmten Zeitversatz (T) in Schließstellung gesteuert werden.

12. Verfahren nach Anspruch 11,
**dadurch gekennzeichnet, dass**
- die Brenngas-Düsenventilglieder (9a,b,c) in Brennraumdrallrichtung (D) nacheinander mit vorbestimmtem Zeitversatz (T) in Schließstellung gesteuert werden.

13. Verfahren nach einem der Ansprüche 11 und 12,
**dadurch gekennzeichnet, dass**
- die Brenngas-Düsenventilglieder (9a,b,c) so gesteuert werden, dass Restgas (15) seitens eines in Schließstellung gesteuerten Brenngas-Düsenventilglieds (9a,b,c) während des vorbestimmten Zeitversatzes (T) brennraumdrallbasiert an den Abbrandort des nachfolgend in Schließstellung zu steuernden Brenngas-Düsenventilglieds (9a,b,c) transportiert wird; und/oder
- die Brenngas-Düsenventilglieder (9a,b,c) so gesteuert werden, dass Restgas (15) seitens eines in Schließstellung gesteuerten Brenngas-Düsenventilglieds (9a,b,c) während des vorbestimmten Zeitversatzes (T) durch Brenngasabbrand an dem nachfolgend in Schließstellung zu steuernden Brenngas-Düsenventilglied (9a,b,c) gezündet wird.

14. Verfahren nach einem der Ansprüche 11 bis 13,
**dadurch gekennzeichnet, dass**
- das Verfahren mit einer Brenngas-Injektoranordnung (1) nach einem der Ansprüche 1 bis 9 oder einer Brennkraftmaschine nach Anspruch 10 durchgeführt wird.

## Claims

1. Fuel gas injector apparatus (1) having a fuel gas injector (3) which has fuel gas nozzle opening groups (11a, b, c) distributed over a circumference and each having at least one fuel gas nozzle opening (13), wherein a respective fuel gas nozzle opening group (11a, b, c) is each assigned a fuel gas nozzle valve element (9a, b, c) of the fuel gas injector (3), which can be controlled into an open position and closed position for selective fuel gas injection via its at least one fuel gas nozzle opening (13),
**characterized in that**
- the fuel gas injector apparatus (1) is configured to control the fuel gas nozzle valve elements (9a, b, c) successively into the closed position with a predetermined time offset (T).

2. Fuel gas injector apparatus (1) according to Claim 1,
**characterized in that**
- the fuel gas injector apparatus (1) is configured to control the fuel gas nozzle valve elements (9a, b, c) successively in a circumferential direction (U) into the closed position with a predetermined time offset (T).

3. Fuel gas injector apparatus (1) according to one of the preceding claims,
**characterized in that**
- the fuel gas injector apparatus (1) is configured to control the fuel gas nozzle valve elements (9a, b, c) successively into the open position with a predetermined opening time offset (V); and/or
- the fuel gas injector apparatus (1) is configured to control the fuel gas nozzle valve elements (9a, b, c) into the open position without any time offset.

4. Fuel gas injector apparatus (1) according to one of the preceding claims,
**characterized in that**
- the fuel gas injector apparatus (1) is configured, when used with a combustion chamber (5), to adjust the predetermined time offset (T) to correspond with a combustion chamber swirl-dependent residual gas transport period (M) between combustion locations of fuel gas nozzle valve elements (9a, b, c) which are to be controlled successively into the closed position; and/or
- the closing order of the fuel gas nozzle valve elements (9a, b, c) or a circumferential direction (U) in relation to successive closure is chosen in accordance with a swirl direction (D) in a combustion chamber (5) to be used with the fuel gas injector apparatus (1).

5. Fuel gas injector apparatus (1) according to one of the preceding claims,
**characterized in that**
- the fuel gas injector apparatus (1) is used with a combustion chamber (5) such that residual gas (15) at a fuel gas nozzle valve element (9a, b, c) that is controlled into the closed position is transported during the predetermined time offset (T) on the basis of the combustion chamber swirl to the combustion location of the fuel gas nozzle valve element (9a, b, c) that is subsequently to be controlled into the closed position; and/or
- the fuel gas injector apparatus (1) is configured, when used with a combustion chamber (5), to ignite residual gas (15) during the predetermined time offset (T) at a fuel gas nozzle valve element (9a, b, c) that is controlled into the closed position, by means of fuel gas combustion at the combustion location of the combustion gas nozzle valve element (9a, b, c) that is subsequently to be controlled into the closed position.

6. Fuel gas injector apparatus (1) according to one of the preceding claims,
**characterized in that**
- the predetermined time offset (T) incorporates a safety period (X).

7. Fuel gas injector apparatus (1) according to one of the preceding claims,
**characterized in that**
- the gas injector apparatus (1) has a control device, which controls the fuel gas injector (3) with the predetermined time offset (T).

8. Fuel gas injector apparatus (1) according to one of the preceding claims,
**characterized in that**
- the fuel gas injector (3) effects the successive assumption of the closed position and/or the open position in a suitably hydraulically designed manner.

9. Fuel gas injector apparatus (1) according to Claim 8,
**characterized in that**
- the fuel gas injector (3) effects the successive assumption of the closed position and/or the open position by means of different control line lengths (L1-L6) and/or different throttle cross sections (D1-D6) in a hydraulic control circuit for the fuel gas nozzle valve elements (9a, b, c).

10. Internal combustion engine having at least one combustion chamber (5) subjected to combustion chamber swirl,
**characterized by**
- at least one fuel gas injector apparatus (1) according to one of the preceding claims, wherein the fuel gas injector (3) is arranged on the combustion chamber (5).

11. Method for controlling fuel gas nozzle valve elements (9a, b, c) of a fuel gas injector (3) which is arranged on a combustion chamber (5) subjected to combustion chamber swirl,
**characterized in that**
- the fuel gas nozzle valve elements (9a, b, c) are controlled successively into the closed position with a predetermined time offset (T).

12. Method according to Claim 11,
**characterized in that**
- the fuel gas nozzle valve elements (9a, b, c) are controlled successively into the closed position in the combustion chamber swirl direction (D) with a predetermined time offset (T).

13. Method according to one of Claims 11 and 12,
**characterized in that**
- the fuel gas nozzle valve elements (9a, b, c) are controlled such that residual gas (15) at a fuel gas nozzle valve element (9a, b, c) that is controlled into the closed position is transported during the predetermined time offset (T) on the basis of the combustion chamber swirl to the combustion location of the fuel gas nozzle valve element (9a, b, c) that is subsequently to be controlled into the closed position; and/or
- the fuel gas nozzle valve elements (9a, b, c) are controlled such that the residual gas (15) at a fuel gas nozzle valve element (9a, b, c) that is controlled into the closed position is ignited during the predetermined time offset (T), by means of fuel gas combustion at the combustion location of the fuel gas nozzle valve element (9a, b, c) that is subsequently to be controlled into the closed position.

14. Method according to one of Claims 11 to 13,
**characterized in that**
- the method is carried out with a fuel gas injector apparatus (1) according to one of Claims 1 to 9 or an internal combustion engine according to Claim 10.

## Revendications

1. Ensemble formant injecteur de gaz combustible (1) comprenant un injecteur de gaz combustible (3) qui comporte des groupes d'ouvertures de buse de gaz combustible (11a, b, c) répartis sur une périphérie et pourvus chacun d'au moins une ouverture de buse de gaz combustible (13), un élément de soupape de buse de gaz combustible (9a, b, c), commandable en position ouverte et en position fermée, de l'injecteur de gaz combustible (3) étant associé à un groupe d'ouvertures de buse de gaz combustible respectif (11a, b, c) pour délivrer sélectivement de façon dosée du gaz combustible par le biais de son au moins une ouverture d'injecteur de gaz combustible (13), **caractérisé en ce que**
- l'ensemble formant injecteur de gaz combustible (1) est conçu pour commander par la suite en position fermée les éléments de soupape de buse de gaz combustible (9a, b, c) avec un décalage temporel prédéterminé (T).

2. Ensemble formant injecteur de gaz combustible (1) selon la revendication 1,
**caractérisé en ce que**
- l'ensemble formant injecteur de gaz combustible (1) est conçu pour commander par la suite en position fermée les éléments de buse d'injecteur de gaz combustible (9a, b, c) dans un sens périphérique (U) avec un décalage temporel prédéterminé (T).

3. Ensemble formant injecteur de gaz combustible (1) selon l'une des revendications précédentes,
**caractérisé en ce que**
- l'ensemble formant injecteur de gaz combustible (1) est conçu pour commander par la suite en position ouverte les éléments de buse d'injecteur de gaz combustible (9a, b, c) avec un décalage temporel d'ouverture prédéterminé (V) ; et/ou
- l'ensemble formant injecteur de gaz combustible (1) est conçu pour commander les éléments de buse d'injecteur de gaz combustible (9a, b, c) en position ouverte sans décalage temporel.

4. Ensemble formant injecteur de gaz combustible (1) selon l'une des revendications précédentes,
**caractérisé en ce que**
- l'ensemble formant injecteur de gaz combustible (1) est conçu, lorsqu'il est utilisé avec une chambre de combustion (5), pour régler le décalage temporel prédéterminé (T), correspondant à une durée de transport de gaz résiduel (M) dépendant de la rotation de chambre de combustion, entre des emplacements de combustion d'éléments de soupape de buse de gaz combustible (9a, b, c) à commander successivement en position fermée ; et/ou
- l'ordre de fermeture des éléments de soupape de buse de gaz combustible (9a, b, c) ou un sens périphérique (U) est choisi par rapport à une fermeture successivement dans un sens de rotation (D) dans une chambre de combustion (5) à utiliser avec l'ensemble formant injecteur de gaz combustible (1).

5. Ensemble formant injecteur de gaz combustible (1) selon l'une des revendications précédentes,
**caractérisé en ce que**
- l'ensemble formant injecteur de gaz combustible (1) est utilisé avec une chambre de combustion (5) de façon à transporter du gaz résiduel (15) de l'élément de soupape de buse de gaz combustible (9a, b, c) pendant le décalage temporel prédéterminé (T) sur la base de la rotation de la chambre de combustion à l'emplacement de combustion de l'élément de soupape de buse de gaz combustible (9a, b, c) à commander par la suite en position fermée ; et/ou
- l'ensemble formant injecteur de gaz combustible (1) est conçu, lorsqu'il est utilisé avec une chambre de combustion (5), pour allumer du gaz résiduel (15) du côté de l'élément de soupape de buse de gaz de combustion (9a, b, c), commandé en position fermée, pendant le décalage temporel prédéterminé (T) par combustion de gaz combustible à l'emplacement de combustion de l'élément de soupape de buse de gaz combustible (9a, b, c) à commander par la suite en position fermée.

6. Ensemble formant injecteur de gaz combustible (1) selon l'une des revendications précédentes,
**caractérisé en ce que**
- le décalage temporel prédéterminé (T) comprend une période de sécurité (X).

7. Ensemble formant injecteur de gaz combustible (1) selon l'une des revendications précédentes,
**caractérisé en ce que**
- l'ensemble formant injecteur de gaz combustible (1) comprend un dispositif de commande qui commande l'injecteur de gaz combustible (3) avec le décalage temporel prédéterminé (T).

8. Ensemble formant injecteur de gaz combustible (1) selon l'une des revendications précédentes,
**caractérisé en ce que**
- l'injecteur de gaz combustible (3) provoque l'occupation successive de la position fermée et/ou de la position ouverte de manière appropriée par des moyens hydrauliques.

9. Ensemble formant injecteur de gaz combustible (1) selon la revendication 8,
**caractérisé en ce que**
- l'injecteur de gaz combustible (3) provoque l'occupation successive de la position fermée et/ou de la position ouverte à l'aide de différentes longueurs de conduite de commande (L1-L6) et/ou de différentes sections transversales d'étranglement (D1-D6) dans un circuit de commande hydraulique destiné aux éléments de soupape de buse de gaz combustible (9a, b, c).

10. Moteur à combustion interne comprenant au moins une chambre de combustion (5) en rotation,
**caractérisé par**
- au moins un ensemble formant injecteur de gaz combustible (1) selon l'une des revendications précédentes, l'injecteur de gaz combustible (3) étant disposé au niveau de la chambre de combustion (5).

11. Procédé de commande d'éléments de soupape de buse de gaz combustible (9a, b, c) d'un injecteur de gaz combustible (3) qui est disposé au niveau d'une chambre de combustion (5) en rotation,
**caractérisé en ce que**
- les éléments de soupape de buse de gaz combustible (9a, b, c) sont commandés en position fermée successivement avec un décalage temporel prédéterminé (T).

12. Procédé selon la revendication 11,
**caractérisé en ce que**
- les éléments de soupape de buse de gaz combustible (9a, b, c) sont commandés en position fermée dans le sens de rotation de la chambre de combustion (D) successivement avec un décalage temporel prédéterminé (T).

13. Procédé selon l'une des revendications 11 et 12,
**caractérisé en ce que**
- les éléments de soupape de buse de gaz combustible (9a, b, c) sont commandés en position fermée de manière à transporter du gaz résiduel (15) du côté de l'élément de soupape de buse de gaz combustible (9a, b, c) pendant le décalage temporel prédéterminé (T) sur la base de la rotation de la chambre de combustion à l'emplacement de combustion de l'élément de soupape de buse de gaz combustible (9a, b, c) à commander par la suite en position fermée ; et/ou
- les éléments de soupape de buse de gaz combustible (9a, b, c) sont commandés de manière à allumer du gaz résiduel (15) du côté de l'élément de soupape de buse de gaz de combustion (9a, b, c), commandé en position fermée, pendant le décalage temporel prédéterminé (T) par combustion de gaz combustible à l'emplacement de combustion de l'élément de soupape de buse de gaz combustible (9a, b, c) à commander par la suite en position fermée.

14. Procédé selon l'une des revendications 11 à 13,
**caractérisé en ce que**
- le procédé est mis en œuvre à l'aide d'un ensemble formant injecteur de gaz combustible (1) selon l'une des revendications 1 à 9 ou d'un moteur à combustion interne selon la revendication 10.
